Europäisches Patentamt

**European Patent Office**

Office européen des brevets

(11) Publication number: **0 019 375**
**A1**

## (12) EUROPEAN PATENT APPLICATION

(21) Application number: **80301316.8**

(22) Date of filing: **23.04.80**

(51) Int. Cl.³: **C 08 G 18/80**

(30) Priority: **23.04.79 GB 7913974**

(43) Date of publication of application:
**26.11.80 Bulletin 80/24**

(84) Designated Contracting States:
**AT BE CH DE FR GB IT LI LU NL SE**

(71) Applicant: **THE BAXENDEN CHEMICAL COMPANY
LIMITED
Paragon Works
Baxenden, Near Accrington Lancashire BB5 2SL(GB)**

(72) Inventor: **Brown, Keith Edwin
8 Charles Street
Clayton-le Moors Accrington, Lancs.(GB)**

(72) Inventor: **Taylor, Alan
37 Alma Avenue Foulridge
Colne, Lancs(GB)**

(72) Inventor: **Wildman, Andrew Ellison
8 Woodhead Road Read
Burnley, Lancs(GB)**

(74) Representative: **Goldin, Douglas Michael et al,
J.A. KEMP & CO. 14, South Square Gray's Inn
London WC1R 5EU(GB)**

(54) **A process for the manufacture of polyurethane foams.**

(57) Polyurethane foams are prepared from an undistilled polymeric diphenyl methane diisocyanate by first reacting the isocyanate with a monofunctional compound containing active hydrogen in the functional group e.g. a $C_6$-$C_{18}$ alkanol, an amine, amide or acid such as tall oil, so as to reduce the functionality of the isocyanate to a value not less than 2 isocyanate groups per molecule, and then reacting the isocyanate of reduced functionality with a conventional polyfunctional active hydrogen component. By modifying the isocyanate in this way, it is possible, using an undistilled isocyanate, to obtain a polyurethane foam having the softer and less "boardy"" characteristics usually associated with foams obtained from isocyanate mixtures including tolylene diisocyanates.

Croydon Printing Company Ltd.

- 1 -

"IMPROVEMENTS RELATING TO POLYURETHANES"

This invention relates to polyurethanes and is particularly concerned with a new method of preparing superior highly resilient flexible polyurethane foams utilising a commercially available undistilled polymeric diphenyl methane diisocyanate (crude MDI) as the isocyanate component. It is known to prepare highly resilient flexible polyurethane foams by reacting a high molecular weight polyether polyol, usually of molecular weight about 4,500 to 6,500, containing conventional additives such as low molecular weight cross-linking agents, water, tertiary amine catalysts, silicone surfactants and optionally auxiliary foaming agents such as fluorocarbons with an isocyanate component which is either a mixture of pure tolylene diisocyanate (TDI) and crude MDI or TDI on its own. Due to the high TDI content of the resulting polyurethane foams, they are somewhat hazardous to process and strict precautions must be observed at all times during their manufacture to extract the TDI vapours evolved.

Polyurethane foams derived from MDI are much safer to handle and hence are industrially the more attractive compared to those prepared from isocyanate components including TDI. However, if the TDI component is simply removed from the isocyanate component and a crude MDI material used as the isocyanate, then the resulting foams are much harder and "Boardier" than foams prepared from an isocyanate component including TDI. The crude MDI based foam also has a much lower tensile and tear strength. If moulded cushions or, indeed, slabstock foams are made from such crude MDI foams, the low tear strength means that the surface can be very easily torn and abraded and the corners of the foam blocks or mouldings are very easily broken away.

We have now found that it is possible to avoid the processing problems associated with the use of TDI by preparing the polyurethane foam from a crude MDI material, but, by carrying out the process in two stages, to avoid producing a polyurethane foam with the unsatisfactory physical properties traditionally associated with crude MDI polyurethane foams.

Accordingly, the present invention provides a process for the manufacture of a polyurethane foam which comprises, in a first step, reacting an undistilled polymeric diphenyl methane diisocyanate, hereinafter designated crude MDI, with a mono-functional compound containing an active hydrogen atom in the functional group so as to reduce the isocyanate functionality of the crude MDI to a value not less than 2 isocyanate groups per molecule and then, in a second step, reacting the crude MDI of reduced functionality with a polyfunctional active hydrogen component.

Crude MDI normally has a functionality of approximately 2.5 to 3.0 isocyanate groups per molecule, whereas pure distilled TDI has a functionality of 2.0 isocyanate groups per molecule. By reacting crude MDI with a mono-functional active hydrogen compound in a first step, it is believed that the mono-functional active hydrogen compound can react with some of the isocyanate groups of the crude MDI, effectively blocking them and so leaving effectively a di-functional isocyanate component which can then react with the polyfunctional active hydrogen compound in accordance with the traditional polyurethane forming reaction. We have found that the closer the functionality of the crude MDI approaches 2.0 after the first step of the reaction, the more satisfactory are the properties of the final polyurethane foam.

The process of the present invention enables polyurethane foams to be produced by a simple procedure from crude MDI to give a foam having properties which are at least as good as those of foams obtained using pure TDI as the polyisocyanate component. The use of the present invention avoids the need to attempt to isolate pure MDI from the commercially available crude material. This last-mentioned

- 4 -

procedure is unattractive commercially because, not only is it necessary to incur additional expense by distillation, but it is also necessary to incur additional expense to keep the pure MDI at controlled temperature conditions because the pure MDI tends to dimerise if stored at room temperature.

We also find that it is important, in carrying out the process of the invention, to reduce the functionality of the crude MDI in a preliminary step. If crude MDI is reacted with a mixture of mono-functional and polyfunctional active hydrogen compounds, the mono-functional reactant has to compete with the polyfunctional reactant and this is found to give rise to a less satisfactory foam at the termination of the reaction.

The mono-functional active hydrogen compound used to reduce the functionality of the crude MDI can be a compound containing any of the active hydrogen-containing groups conventionally used to react with isocyanate groups. Thus, the mono-functional compound will normally be a mono-functional alcohol, particularly an alkanol of formula $C_nH_{2n+1}OH$ where n is an integer of 6 to 18. Preferred alkanols of this type include cetyl alcohol, lauryl alcohol, n-decyl alcohol and n-octyl alcohol. It is not essential that the mono-functional active hydrogen compound be an alkanol of the above-mentioned type, but use can also be made of alkanols where the alkyl chain is

- 5 -

branched or where it is substituted by other groups which are inert in the reaction of the hydroxy function with the isocyanate group. Such inert groups include, for example aryl substituents, etherified hydroxyl groups etc.

The active hydrogen compound need not necessarily be a hydroxy compound but can be any of the other active hydrogen compounds that are known to be capable of reacting with isocyanate groups. Examples of such active hydrogen compounds are carboxylic acids, particularly unsaturated acylic carboxylic acids; unsubstituted and monosubstituted monoamides, particularly amides of aliphatic monocarboxylic acids; and secondary monoamides, particularly aliphatic secondary monoamides such as di-n-butylamine, di-n-octylamine, di-(2-ethylhexyl)amine or di-isononylamine or unsymmetrical dialkylamine analogues thereof. When the active hydrogen compound is a carboxylic acid, the preferred material is a distilled tall oil which is distilled from spent wood pulping liquors and which is an oily acidic mixture including rosin acids such as abietic acid, unsaturated fatty acids such as oleic, linoleic and linolenic acids and phytosterols and higher alcohols. Tall oils having low rosin acid contents are particularly preferred.

In general, the mono-functional active hydrogen-containing compound can be a mono-functional analogue of any of the polyfunctional compounds conventionally used to react with polyisocyanates to form polyurethanes.

The proportion of mono-functional active hydrogen compound to be used to react with the crude MDI depends upon the functionality of the crude MDI and the reactivity of the active hydrogen group. The objective in this preliminary step is to reduce the functionality of the crude MDI to as close as possible to 2, but not less than 2, by a preliminary reaction in which the crude MDI is converted into an isocyanato terminated prepolymer. This prepolymer can be regarded as one in which some, but not all, of the isocyanate groups are reacted and effectively capped with what is an inert group during the subsequent polyurethane forming reaction and no additional branching points are introduced during this prepolymer formation step.

The main polyurethane forming reaction is carried out conventionally using the isocyanato terminated prepolymer obtained from the crude MDI as described above as the isocyanate component and a polyfunctional active hydrogen compound as the second component. This second component will normally predominantly consist of one of the aliphatic polyether polyols conventionally used in polyurethane formation.

Suitable polyether polyols are triols based on the alkoxylated addition products of glycerol, the triols having a molecular weight from 4500-6500, preferably about 6000.

Ethylene oxide or a mixture of ethylene oxide and propylene oxide is normally used for the alkoxylation. These triols contain primary as well as secondary hydroxyl groups and can contain up to 40% of the hydroxyl group content as primary hydroxyl groups. Both the prepolymer step and the polyurethane formation step may be carried out in the presence of catalysts conventionally used to catalyse the reaction between isocyanate groups and active hydrogen groups and reference may be made particularly to amine catalysts, particularly aliphatic amines such as triethylamine or dimethylcyclohexylamine or alkanolamines such as dimethylaminoethanol. Tin containing catalysts can also be used and, in this category, reference may be made to alkylated tin esters of the higher carboxylic acids, for example, alkylated tin esters of $C_8$ to $C_{18}$ aliphatic carboxylic acids, e.g. lauric or stearic acid, dibutyltin-dilaurate being one of the preferred catalysts of this type.

The polyurethane forming reaction may also be carried out in the presence of other additives conventionally used during polyurethane formation, for example tris-(monochloropropyl) phosphate to impart fire-resistant properties to the foam or various silicones to modify the pore structure of the resulting foam.

Although the polyfunctional active hydrogen component used in the polyurethane formation will normally

- 8 -

consist predominantly of trifunctional materials, use may also be made of active hydrogen components having a higher functionality so that they can impart a desired degree of cross-linking into the eventual foam.

The following Examples are given to illustrate the invention:

## EXAMPLE 1

A mixture of 90% by weight crude MDI (Suprasec DND) and 10% by weight of cetyl alcohol, prepared by adding the alcohol to the crude MDI, is heated and stirred at 135 to 140°C over a period of 30 minutes. The mixture is then allowed to cool to room temperature, the resulting liquid prepolymer being a dark brown viscous liquid having a viscosity of approximately 13,000 c.p.s. at room temperature and a free NCO content of 25.7%.

## EXAMPLE 2

The procedure described in Example 1 was repeated, by replacing the cetyl alcohol with lauryl alcohol and n-decyl alcohol to give prepolymers having a similar NCO content to that of Example 1, but having a lower viscosity in the region of 1400 c.p.s.

EXAMPLE 3

A suitable polyether resin blend, to react with the isocyanato terminated prepolymer, is prepared as follows:

|  | Parts by weight |
|---|---|
| Polyethertriol, approximate molecular weight 6,000-6,500 - Formrez A1228 (Witco) | 81.6 |
| Amine polyol - RA 640 (DOW) | 0.2 |
| Aromatic Diol - XS2074 (DOW) | 0.2 |
| Diethanolamine | 0.5 |
| N-hexadecyl dimethylamine - Armeen DM16D (AKZO) | 1.5 |
| Dabco WT (triethylene diamine formate) | 0.7 |
| Water | 2.8 |
| Silicon surfactant, L5307 (Union Carbide) | 0.5 |
| Trichloro fluoromethane | 12.0 |

Propylan M111 (Lankro) or Lupranol 1371 (BASF) can be used in place of Formrez A1228 as the polyethertriol component.

68 Parts of the above-described resin blend was mixed with 32 parts of the prepolymer prepared from lauryl alcohol as described in Example 2. The reaction rate of the mixture was such that there was a cream time of approximately 20 seconds, a rise time of approximately 120 to 150 seconds and a tack free time of 180 seconds. The resulting polyurethane foam had a free blow core density of 40 Kg/M$^3$ and a tear strength of 0.9-1.1 p.l.i..

A moulding was also made from this foam in an 8 inch by 8 inch by 2 inch mould to give an overall moulded density of 60 Kg/M$^3$. This foam had good resilience and comparable tensile and tear properties to a high resilient foam manufactured from a mixture of 60% crude MDI and 40% pure TDI, a mixture which is widely used commercially.

When the polyether resin blend was reacted with isocyanato terminated prepolymers obtained from crude MDI and cetyl alcohol, n-decyl alcohol, n-octyl alcohol, very similar foams were obtained.

By way of comparison, when the polyether resin blend of Example 3 was reacted with crude MDI, identical to the crude MDI from which the isocyanato terminated prepolymer was prepared, a much harder and "boardier" foam was obtained with inferior resilience properties and having a tear strength of only 0.4 to 0.5 p.l.i.

- 11 -

EXAMPLE 4

A mixture containing 5. w/w of the distilled tall oil OULU-102 (which contains not more than 2% w/w rosin acids) and 95% w/w crude MDI is heated to 90° to 95°C for 1 hour. The mixture is then cooled to room temperature to give a dark brown liquid prepolymer of viscosity approximately 1500 c.p.s. and a free isocyanate content of 27.5%. This prepolymer is reacted with the polyether resin blend described in Example 3 in approximately 1 : 2 proportion by weight to give a polyurethane foam having a density and tear strength similar to that of the foam described in Example 3 prepared from the lauryl alcohol modified isocyanate.

## CLAIMS

1.      A process for the manufacture of a polyurethane foam which comprises, in the first step, reacting an undistilled polymeric diphenyl methane diisocyanate, hereinafter designated crude MDI, with a mono-functional compound containing an active hydrogen atom, in the functional group so as to reduce the isocyanate functionality of the crude MDI to a value not less than 2 isocyanate groups per molecule and then, in a second step, reacting the crude MDI of reduced functionality with a polyfunctional active hydrogen component.

2.      A process according to claim 1 wherein the monofunctional compound is used in an amount such that the functionality of the resulting crude MDI of reduced functionality approaches 2 as closely as possible.

3.      A process according to claim 1 or 2 wherein the monofunctional compound is an alcohol.

4.      A process according to claim 3 wherein the alcohol is an alkanol of formula $C_nH_{2n+1}OH$ where n is an integer of 6 to 18.

5.      A process according to claim 4 wherein the alkanol is cetyl alcohol, lauryl alcohol, n-decyl alcohol
or n-octyl alcohol.


6.      A process according to claim 1 or 2 wherein the
monofunctional compound is an unsubstituted or monosubstituted monoamide such as an aliphatic monocarboxylic
acid amide or a secondary monoamine such as di-n-butylamine,
di-n-octylamine, di-(2-ethylhexyl)amine, di-isononylamine
or an unsymmetrical dialkylamine analogue of one of these
secondary monoamines.


7.      A process according to claim 1 or 2 wherein the
monofunctional compound is a carboxylic acid.


8.      A process according to claim 7 wherein the acid
is a distilled tall oil, particularly one of low rosin acid
content.


9.      A process according to any one of the preceding
claims wherein the crude MDI of reduced functionality is
reacted in the second step with a polyether polyol of
molecular weight 4500-6500, such as a reaction product
of glycerol with an alkylene oxide.

## DOCUMENTS CONSIDERED TO BE RELEVANT

| Category | Citation of document with indication, where appropriate, of relevant passages | Relevant to claim |
|---|---|---|
| X | US – A – 3 467 607 (W.C. KURYLA et al.) <br> * Columns 12-14; claims 1-3,6-8; column 1, lines 13-24; column 4, line 69 – column 5, line 60 * <br> –– | 1-9 |
| X | GB – A – 1 056 230 (MOBAY) <br> * Pages 11,12; claims 1-6,10-12; page 2, line 20 – page 3, line 8; page 4, lines 22-43; page 6, lines 5-30; page 7, lines 52-54; page 11, example 5 * <br> –– | 1-9 |
| X | US – A – 3 437 608 (R.A. POHL) <br> * Columns 5,6; claims 1-3,6; column 2, lines 44-60; column 3, lines 14-38; column 3, line 57 – column 4, line 3 * <br> –– | 1,2,6, 9 |
| A | FR – A – 2 059 062 (UNIROYAL) <br> * Pages 16-18; claims 1,3,4; page 4, line 16 – page 5, line 19 * <br> ──── | 1 |

**CLASSIFICATION OF THE APPLICATION (Int. Cl. 3)**

C 08 G 18/80

**TECHNICAL FIELDS SEARCHED (Int.Cl. 3)**

C 08 G 18/80
18/76

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-07-1980 | V. PUYMBROEK |